# EUROPEAN PATENT APPLICATION

(11) **EP 4 668 702 A1**
(43) Date of publication of application: **24.12.2025**
(21) Application number: 25183985.8
(22) Date of filing: 19.06.2025
(51) Int. Cl.: H04L 45/74

(54) **MATCHING HOST IP ADDRESSES WITH OVERLAPPING SUBNETS AND IP RANGES**

(30) Priority: 21.06.2024 US 202463662974 P
(71) Applicant: NetScout Systems, Inc., Westford, MA 01886 (US)
(72) Inventor: Ahire, Chandrakant, Westford, Massachusetts 01886 (US); Chaudhary, Ashish, Westford, Massachusetts 01886 (US); Phadke, Shailendra, Westford, Massachusetts 01886 (US)
(74) Representative: J A Kemp LLP

(57) **Abstract**

A method can include generating a data structure comprising a set of subnets or Internet Protocol (IP) ranges by calculating the lowest and highest IP addresses for each of a plurality of subnets or IP ranges, converting each calculated IP address into an integer value, and sorting the plurality of subnets or IP ranges in descending order based on a lowest converted integer value of each of the plurality of subnets or IP ranges. The method further comprises identifying a host IP address, iteratively querying, using the identified host IP address, individual subnets or IP ranges of the set of subnets or IP ranges in order of increasing size beginning with a subnet or IP range with a smallest size until identifying a subnet or IP range in which the host IP address falls, and labeling the host IP address with an indication of the identified subnet or IP range.

## Description

### CROSS-REFERENCE TO RELATED APPLICATIONS

This application claims priority to U.S. Application No.: 63/662,974, entitled SYSTEMS AND METHODS FOR MATCHING HOST INTERNET PROTOCOL ADDRESSES WITH OVERLAPPING SUBNETS AND INTERNET PROTOCOL ADDRESS RANGES, filed June 21, 2024, which is hereby incorporated by reference in its entirety.

### BACKGROUND

In various network applications, it is often necessary to determine whether a given Internet Protocol (IP) address falls within one or more predefined ranges or subnets. This process, known as IP address range matching or subnet matching, is fundamental to many networking tasks such as packet routing, firewall configuration, and network security analysis. IP address ranges can be represented in various formats, including Classless Inter-Domain Routing (CIDR) notation. CIDR notation allows for flexible allocation of IP address blocks by specifying a base IP address followed by a prefix length indicating the number of significant bits. For example, 192.168.0.0/24 represents a range of 256 IP addresses from 192.168.0.0 to 192.168.0.255.

In real-world scenarios, network administrators often deal with multiple overlapping IP address ranges or subnets. These overlaps can occur due to various factors such as network segmentation, virtual private networks (VPNs), or complex routing configurations. Managing and efficiently querying these overlapping ranges presents technical challenges. Traditional approaches to IP address range matching often involve linear searches through lists of ranges or the use of data structures like binary trees. However, these methods can become inefficient as the number of ranges increases, particularly when dealing with large-scale networks or high-throughput applications. Furthermore, the dynamic nature of modern networks requires systems that can handle frequent updates to IP address range definitions without significant performance degradation. This poses additional challenges in maintaining data structures and ensuring consistent query results during updates.

### BRIEF DESCRIPTION OF FIGURES

The accompanying drawings are not intended to be drawn to scale. Like reference numbers and designations in the various drawings indicate like elements. For purposes of clarity, not every component may be labeled in every drawing. In the drawings:
FIG. 1 is an illustration of an example system for matching host Internet Protocol addresses with overlapping subnets and Internet Protocol address ranges, in accordance with an implementation;
FIG. 2A is an example method for matching host Internet Protocol addresses with overlapping subnets and Internet Protocol address ranges, in accordance with an implementation;
FIG. 2B is an example method for matching host Internet Protocol addresses with overlapping subnets and Internet Protocol address ranges, in accordance with an implementation;
FIG. 3A is a block diagram depicting an implementation of a network environment including a client device in communication with a server device;
FIG. 3B is a block diagram depicting a cloud computing environment including a client device in communication with cloud service providers; and
FIG. 3C is a block diagram depicting an implementation of a computing device that can be used in connection with the systems depicted in FIGS. 1, 3A, and 3B and the method depicted in FIGs. 2A and 2B.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The present disclosure relates to methods and systems for efficiently matching host Internet Protocol (IP) addresses with overlapping subnets and IP address ranges. This approach is particularly useful in network monitoring applications, such as host analysis and violation policy alerts. The methods and systems described herein are applied to both IPv4 and IPv6 address formats, providing flexibility and broad applicability across different network configurations. In some cases, network monitoring systems need to accurately associate host IP addresses with their corresponding subnets or IP ranges. This association is challenging when dealing with overlapping subnets or IP ranges, as traditional matching methods struggle to identify the most specific or narrowest subnet that contains a given host IP address.

The methods and systems described herein address these challenges by preprocessing subnet and IP range information, converting IP addresses into a standardized format for efficient comparison, and maintaining a sorted data structure that allows for rapid querying and matching operations. This approach enables more efficient and accurate host IP address matching, which in turn supports improved network monitoring capabilities. The methods and systems described herein are particularly useful for implementing host analysis features in network monitoring applications. By accurately associating host IP addresses with their corresponding subnets, network administrators gain valuable insights into network traffic patterns and potential security issues. Additionally, the efficient matching of host IP addresses to subnets or IP ranges supports the implementation of violation policy alerts. These alerts are triggered when network activity associated with a particular host IP address violates predefined policies or thresholds. By quickly and accurately identifying the subnet or IP range associated with a host IP address, the system generates more precise and actionable alerts for network administrators.

The methods and systems described herein are implemented in various network environments and are adaptable to different network configurations and addressing schemes. This flexibility allows for broad application across diverse network infrastructures, supporting improved network monitoring and management capabilities.

A network monitoring system may employ features such as host analysis and violation policy alerts, in which users can configure host groups that can contain overlapping subnets and Internet Protocol (IP) address ranges. An important aspect of host analysis can involve accurately tagging each host IP address with its corresponding matching subnet during logging of Adaptive Service Intelligence (ASI) data or other types of data collected and/or derived from network traffic monitored across a communications network in a database. However, it can be difficult to match host IP addresses (e.g., IPv4 or IPv6) with configured subnets or IP ranges.

A computer implementing the systems and methods described herein can overcome the aforementioned technical deficiencies. The computer can identify the most specific (e.g., narrowest) subnet or IP range within a host group that contains a given host IP address (e.g., IPv4 or IPv6). The computer can do so, for example, by first preprocessing defined subnets and IP ranges. The computer can sort the defined subnets and IP ranges in ascending order according to size (e.g., narrowest to widest or smallest to largest). After generating the data structure, the computer can use the data structure for matching IP addresses to individual subnets and/or IP ranges. The computer can compare IP addresses (e.g., IP addresses included in data packets transmitted across a communications network) to the data structure. The computer can compare an IP address with individual subnets and/or IP ranges in a query starting with the smallest or narrowest subnet or IP range and iterating the query through the next largest subnet or IP range of the data structure until identifying a subnet or IP range that contains the IP address. The sorted data structure can facilitate faster and more efficient matching and/or querying for matching IP addresses to subnets and/or IP ranges.

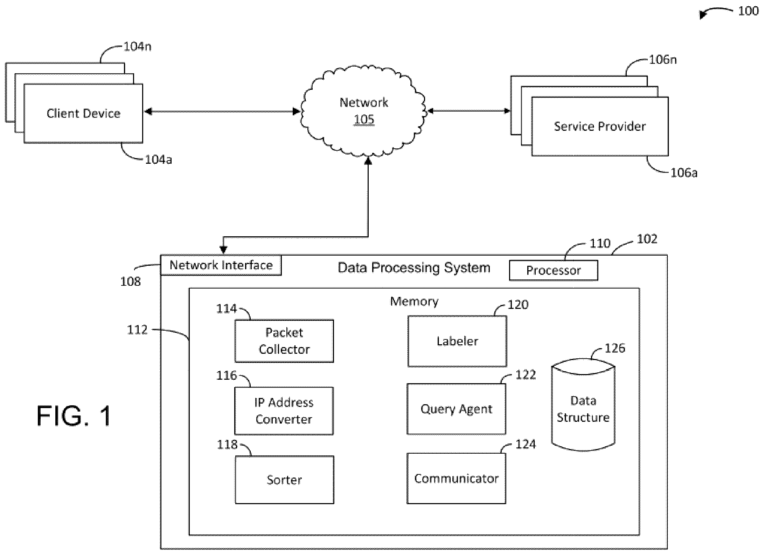

FIG. 1 illustrates an example system 100 for matching host Internet Protocol addresses with overlapping subnets and Internet Protocol address ranges, in some embodiments. The system 100 may provide improved network monitoring of a communications network to detect attacks on the communications network. In brief overview, the system 100 can include a data processing system 102 that receives and/or stores data packets transmitted via a network 105 between client devices 104a-n (hereinafter client device 104 or client devices 104) and service providers 106a-n (hereinafter service provider 106 or service providers 106). The service providers 106 can each include a set of one or more servers 1102, depicted in FIG. 11A, or a data center 1108. The data processing system 102 can generate a database or data structure by sorting individual subnets and/or IP ranges. The data processing system 102 can sort the subnets and/or IP ranges by size and/or lowest value. The data processing system 102 can then query the database with labels of IP addresses (e.g., host IP addresses) to determine the subnets and/or IP ranges the IP within which the IP addresses fall. The sorting can facilitate faster retrieval and/or querying of IP addresses within the database. The data processing system 102 can label the IP addresses to indicate the subnets and/or IP ranges in which the IP addresses fall.

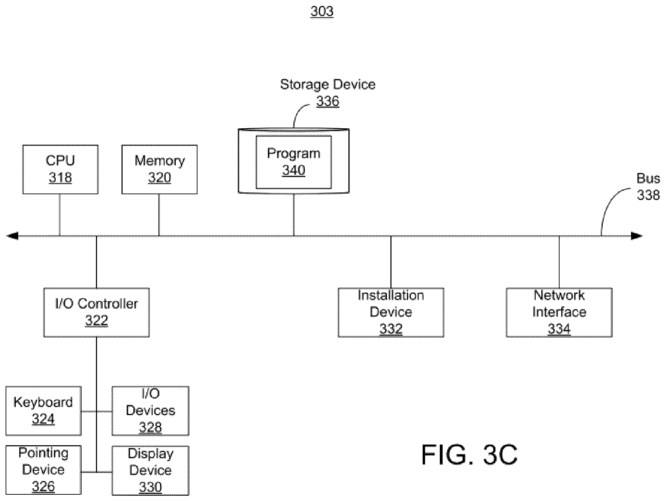

The data processing system 102, the client devices 104 and/or the service providers 106 can each include or execute on one or more processors or computing devices (e.g., the computing device 303 depicted in FIG. 3C) and/or communicate via the network 105. The network 105 can be a communications network and can include computer networks such as the Internet, local, wide, metro, or other area networks, intranets, satellite networks, and other communication networks such as voice or data mobile telephone networks. The network 105 can be used to access information resources such as web pages, websites, domain names, or uniform resource locators that can be presented, output, rendered, or displayed on at least one computing device (e.g., client device 104), such as a laptop, desktop, tablet, personal digital assistant, smartphone, portable computers, or speaker. In some embodiments, the network 105 may be or include a self-organizing network that implements a machine learning model to automatically adjust connections and configurations of network elements of the network 105 to optimize network connections (e.g., minimize latency, reduce dropped calls, increase data rate, increase quality of service, etc.).

Each of the data processing system 102, the client devices 104, and/or the service providers 106 can include or utilize at least one processing unit or other logic device such as a programmable logic array engine, or module configured to communicate with one another or other resources or databases. The components of the data processing system 102, the client devices 104, and/or the service providers 106 can be separate components or a single component. The system 100 and its components can include hardware elements, such as one or more processors, logic devices, or circuits.

Still referring to FIG. 1, and in further detail, the system 100 can include the service providers 106. The service providers 106 may each be or include servers or computers configured to transmit or provide services across network 105 to the client devices 104. The service provider 106 can be or include host computing devices. The service providers 106 may transmit or provide such services upon receiving requests for the services from any of the client devices 104. The term "service" as used herein includes the supplying or providing of information over a network, and is also referred to as a communications network service. Examples of services include 5G broadband services, any voice, data, or video service provided over a network, smart-grid network, digital telephone service, cellular service, Internet protocol television (IPTV), etc.

The client devices 104 can include or execute applications to receive data from the service providers 106. For example, a client device 104 may execute a video application upon receiving a user input selection that causes the client device 104 to open the video application on the display. Responsive to executing the video application, a service provider 106 associated with the video application may stream a requested video to the client device 104 in a communication session. In another example, a client device 104 may execute a video game application. Responsive to executing the video game application, a service provider 106 associated with the video game application may provide data for the video game application to the client device 104. In another example, the client device 104 can execute a browser application that enables a user to browse the Internet. The client devices 104 can be host computing devices, in some cases.

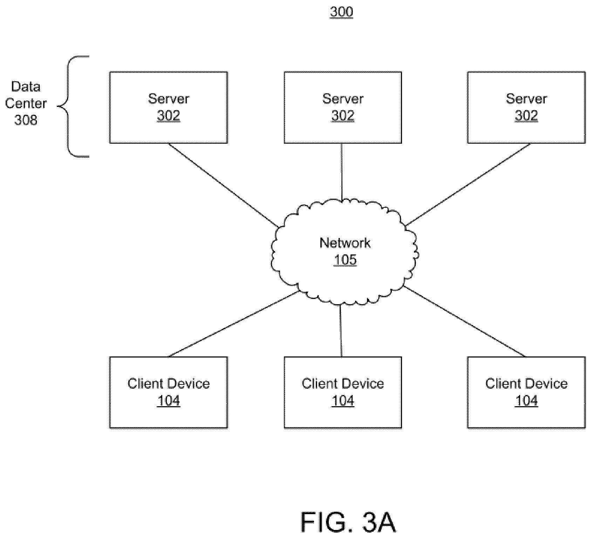

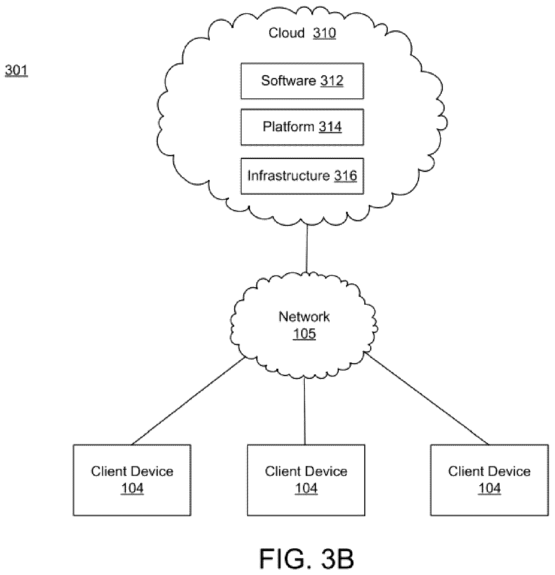

A client device 104 can be located or deployed at any geographic location in the network environment depicted in FIG. 1. A client device 104 can be deployed, for example, at a geographic location where a typical user using the client device 104 would seek to connect to a network (e.g., access a browser or another application that requires communication across a network). For example, a user can use a client device 104 to access the Internet at home, as a passenger in a car, while riding a bus, in the park, at work, while eating at a restaurant, or in any other environment. The client device 104 can be deployed at a separate site, such as an availability zone managed by a public cloud provider (e.g., a cloud 310 depicted in FIG. 3B). If the client device 104 is deployed in a cloud 310, the client device 104 can include or be referred to as a virtual client device or virtual machine. In the event the client device 104 is deployed in a cloud 310, the packets exchanged between the client device 104 and the service providers 106 can still be retrieved by network monitoring equipment or the data processing system 102 from the network 105. In some cases, the data processing system 102 and/or the client devices 104 can be deployed in the cloud 310 on the same computing host in an infrastructure 316 (described below with respect to FIG. 3).

The data processing system 102 may comprise one or more processors that are configured to receive data packets of communication between the client devices 104 and/or the service providers 106 across the network 105. The data processing system 102 may comprise a network interface 108, a processor 110, and/or memory 112. The data processing system 102 may communicate with network monitoring equipment (e.g., a probe monitoring data packets transmitted across a mobile communications network), in some embodiments. The processor 110 may be or include an ASIC, one or more FPGAs, a DSP, circuits containing one or more processing components, circuitry for supporting a microprocessor, a group of processing components, or other suitable electronic processing components. In some embodiments, the processor 110 may execute computer code or modules (e.g., executable code, object code, source code, script code, machine code, etc.) stored in the memory 112 to facilitate the operations described herein. The memory 112 may be any volatile or non-volatile computer-readable storage medium capable of storing data or computer code.

The memory 112 can store a packet collector 114, an IP address converter 116, a sorter 118, a labeler 120, a query agent 122, a communicator 124, and/or a data structure 126. The components 114-126 can operate to sort subnets and/or IP ranges within the data structure 126, such as based on the size and/or the lowest value converted from the respective subnets and/or IP ranges. The components 114-126 can sort the subnets and/or IP ranges in descending order. The components 114-126 can use the sorted data structure to label IP addresses (e.g., host IP addresses or IP addresses identified from data packets or otherwise received or obtained) with the IP ranges and/or subnets in which the IP addresses fall.

In some embodiments, the memory components of the data processing system 100 store various software modules and data structures used in the IP address matching process. As depicted in FIG. 1, these memory components can include the packet collector 114, the IP address converter 116, the sorter 118, the labeler 120, the query agent 112, and the communicator 124. Each of these modules can perform specific functions within the overall IP address matching and labeling process. The packet collector 114 can be responsible for receiving and parsing incoming network packets to extract relevant IP address information. In some cases, the packet collector 114 employs filtering techniques to focus on specific types of network traffic or IP address ranges of interest.

The IP address converter 116 can transform the extracted IP addresses into a standardized format, such as converting them to integer values. This conversion facilitates more efficient comparison and sorting operations within the system. The sorter 118 can organize the converted IP addresses and associated subnet or IP range information into a structured format, such as the data structure 126 shown in FIG. 1. This sorting process can involve arranging subnets and IP ranges based on various criteria, such as size or numerical value, to improve subsequent querying operations.

The labeler 120 can associate metadata with host IP addresses, indicating the specific subnet or IP range to which each address belongs. This labeling process is useful for accurate network traffic analysis and policy enforcement. The query agent 122 can perform lookup operations on the sorted data structure to identify the most specific subnet or IP range for a given host IP address. In some cases, the query agent 122 can employ efficient search algorithms to minimize processing time and resource utilization. The communicator 124 can manage data exchange between the various components of the system, facilitating smooth operation and coordination of the IP address matching and labeling processes.

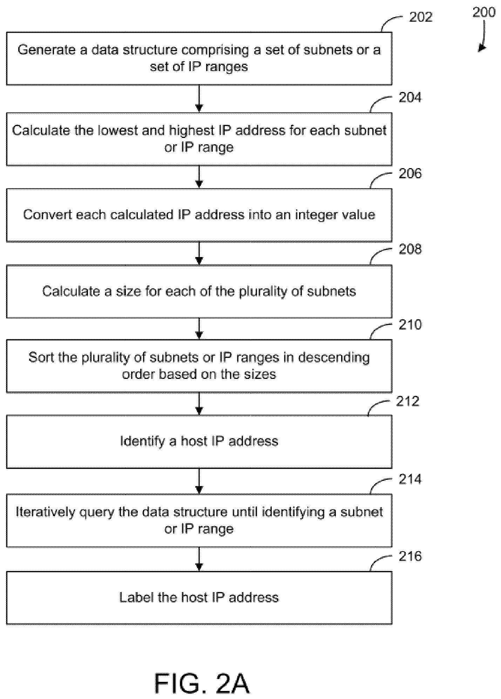

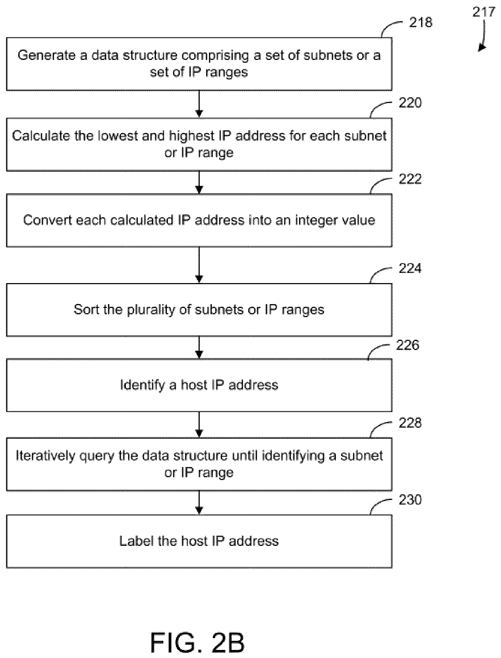

The process of generating a data structure comprising a set of subnets or Internet Protocol (IP) ranges involves several operations such as those operations described with respect to FIG. 2A and FIG. 2B. These processes can be performed by one or more processors of a data processing system, such as the data processing system 102 depicted in FIG. 1.

A method 200 can include an operation 202 in which a processor generates a data structure comprising a set of subnets or a set of IP ranges. In an operation 204, the processor calculates the lowest and highest IP addresses for each subnet or IP range. For IPv4 addresses, this calculation can involve bitwise operations on the 32-bit address and subnet mask. For IPv6 addresses, similar operations can be performed on the 128-bit address space. For example, consider an IPv4 subnet 192.168.1.0/24. The lowest IP address in this subnet is calculated as 192.168.1.0, while the highest IP address is calculated as 192.168.1.255. For an IP range such as 10.0.0.1-10.0.0.10, the lowest and highest IP addresses are explicitly defined by the range boundaries.

After calculating the lowest and highest IP addresses, in an operation 206, each calculated IP address is converted into an integer value. This conversion facilitates efficient comparison and storage of IP addresses within the data structure. In some cases, the conversion process involves two steps: first, converting each calculated IP address into a binary representation and, second, interpreting the binary representation as an integer. For instance, the IPv4 address 192.168.1.0 is converted to its binary representation: 11000000101010000000000100000000. This binary representation is then interpreted as the integer 3232235776. In some cases, IP address ranges are transformed into individual subnets with a '/32' mask, representing single IP addresses. This transformation simplifies the overall processing by treating each IP address within the range as a separate subnet.

In an operation 208, the data structure generation process calculates a size for each subnet or IP range. This size calculation is based on the difference between the values converted from the lowest and highest IP addresses of the subnet or IP range. For example, the size of the subnet 192.168.1.0/24 is calculated as the difference between the integer representations of 192.168.1.255 and 192.168.1.0, resulting in a size of 256.

Once the integer values and sizes have been calculated, the subnets or IP ranges are sorted within the data structure in an operation 210. In some cases, this sorting is performed in descending order based on the lowest converted integer value of each subnet or IP range. Alternatively, the sorting is based on the calculated sizes of the subnets or IP ranges, also in descending order. For example, consider the following subnets:
1. 10.0.0.0/8
2. 192.168.1.0/24
3. 172.16.0.0/16

After converting the lowest IP address of each subnet to an integer and sorting in descending order, the resulting order is:
1. 192.168.1.0/24 (3232235776)
2. 172.16.0.0/16 (2886729728)
3. 10.0.0.0/8 (167772160)

This sorted structure facilitates faster matching and querying operations when identifying the subnet or IP range containing a given host IP address. By organizing the subnets and IP ranges in this manner, the data structure enables efficient identification of the most specific (narrowest) subnet or IP range that contains a given host IP address. This organization is particularly useful in network monitoring applications, such as those involving host analysis and violation policy alerts, where accurate and rapid matching of host IP addresses to their corresponding subnets or IP ranges is crucial.

After generating the sorted data structure comprising subnets or IP ranges, the system proceeds to identify and match host IP addresses in an operation 212. This process involves identifying a host IP address and iteratively querying the data structure to find the most specific subnet or IP range containing the host IP address. In some cases, the system identifies a host IP address from network traffic data collected by the data processing system, as shown in FIG. 1. The host IP address is extracted from data packets transmitted between client devices and service providers across the network.

Once a host IP address has been identified, the system in an operation 214 initiates a process of iteratively querying individual subnets or IP ranges within the sorted data structure. This querying process begins with the subnet or IP range having the smallest size and proceeds in order of increasing size until a match is found. For example, consider a sorted data structure containing the following subnets:
1. 192.168.1.0/30 (size: 4)
2.192.168.1.0/24 (size: 256)
3. 192.168.0.0/16 (size: 65536)

If the system identifies a host IP address of 192.168.1.5, the querying process proceeds as follows. First, the system checks if 192.168.1.5 falls within 192.168.1.0/30. Since 192.168.1.5 is outside this range, the system moves to the next subnet. Next, the system checks if 192.168.1.5 falls within 192.168.1.0/24. Since 192.168.1.5 is within this range, the system identifies this subnet as the most specific match and terminates the search.

In some cases, the system employs a binary search algorithm to efficiently query the sorted set of subnets or IP ranges. A binary search significantly reduces the number of comparisons needed to find the appropriate subnet or IP range, especially for large data structures. For instance, using the previous example with a binary search:
1. The system starts by checking the middle subnet (192.168.1.0/24).
2. Since 192.168.1.5 falls within this subnet, the system narrows the search to the first half of the list.
3. The system then checks 192.168.1.0/30, which does not contain 192.168.1.5.
4. The search terminates, identifying 192.168.1.0/24 as the most specific matching subnet.

By employing these querying techniques, the system efficiently identifies the most specific subnet or IP range for a given host IP address, supporting accurate network monitoring and analysis. After identifying the most specific subnet or IP range containing a host IP address, the system in operation 216 proceeds to label the host IP address with an indication of the identified subnet or IP range. This labeling process involves associating metadata with the host IP address, which includes information about the subnet or IP range to which the host IP address belongs. In some cases, the labeling process involves creating a data structure that associates the host IP address with the identified subnet or IP range. For example, the system creates a key-value pair where the key is the host IP address and the value is a string or object representing the subnet or IP range. This association is stored in memory or written to a persistent storage medium for later retrieval and analysis.

The labeled host IP address is stored in a database for network traffic analysis. This database is part of the data processing system depicted in FIG. 1 or is a separate storage system accessible by the data processing system. Storing the labeled host IP addresses in a database allows for efficient querying and analysis of network traffic patterns based on subnet or IP range associations. For example, a labeled host IP address entry in the database looks like:
192.168.1.5 : \{subnet: 192.168.1.0/24, range: 192.168.1.0 - 192.168.1.255\}

This structured data allows for quick retrieval of subnet information for any given host IP address, facilitating various network analysis tasks. In some cases, the system uses the labeled host IP addresses to generate violation policy alerts. These alerts are triggered when network activity associated with a particular host IP address violates predefined policies or thresholds. By having the subnet or IP range information readily available through the labeling process, the system generates more precise and actionable alerts. For instance, if a policy specifies that hosts in the 192.168.1.0/24 subnet should not communicate with external IP addresses on port 22 (SSH), the system uses the labeled host IP addresses to quickly identify violations of this policy. When a host from this subnet attempts to establish an SSH connection with an external IP, the system generates an alert that includes both the specific host IP address and the subnet information.

FIG. 2B illustrates a method 217 that is an alternative to method 200 described with reference to FIG. 2A. In the method 217, an operation 218 generates a data structure comprising a set of subnets or a set of IP ranges. Operation 220 then calculates the lowest and highest IP address for each subnet or range, such as operation 204 described with reference to FIG. 2A. Each calculated IP address is converted into an integer value in operation 222. Once the integer values have been calculated, the subnets or IP ranges are sorted within the data structure in an operation 224. After sorting subnets or IP ranges, the system proceeds to identify and match host IP addresses in an operation 226. Once a host IP address has been identified, the system in an operation 228 initiates a process of iteratively querying individual subnets or IP ranges within the sorted data structure and in an operation 230 the system labels the host IP address.

The process of labeling host IP addresses and using this information for network analysis and alert generation is part of the overall workflows depicted in FIG. 2A and FIG. 2B. After the iterative querying process identifies the appropriate subnet or IP range, the labeling step is performed, followed by storage in the database and potential use in generating violation policy alerts. By maintaining this labeled information, the system supports a wide range of network monitoring and security applications, allowing network administrators to quickly identify and respond to potential issues or policy violations based on subnet or IP range associations.

An example embodiment of operation of the data processing system 102 is provided below. For each subnet defined (supporting both IPv4 and IPv6 formats), the data processing system 102 calculates the lowest and highest IP addresses the subnet encompasses. The data processing system converts the IP addresses into a single, large integer value for efficient comparison and storage. If an IP address range is specified instead of a subnet, the data processing system 102 converts or transforms the IP address range into individual subnets with a "/32" mask (e.g., representing a single IP address). This approach can simplify the overall processing by treating each IP address within the range as a separate subnet.

The data processing system 102 sorts all the subnets (including those derived from IP ranges) in descending order based on their lowest IP address value (e.g., represented by the large integer) or otherwise based on the IP address values of the subnets. This pre-sorted structure significantly speeds up the matching process later.

In the case of overlapping subnets (where multiple subnets might share the same lowest IP address), the data processing system 102 employs a method of handling potential collisions to ensure accurate matching. If the highest IP address of the conflicting subnet falls below the existing subnet, the data processing system 102 increments the conflicting subnet's hash key (large integer value) by 1. Conversely, if the highest IP address of the conflicting subnet is higher than the existing subnet, the data processing system 102 decrements the conflicting subnet's hash key by 1. This approach prioritizes narrower subnets (those with a smaller range of IP addresses) by placing them higher in the sorted order. This ensures that when searching for a matching subnet, the algorithm prioritizes the most specific subnet that encompasses the given host IP address.

When the data processing system 102 needs to identify the subnet containing a specific host IP address, the data processing system 102 efficiently traverses the pre-sorted list of subnets. Due to the pre-sorting by the lowest IP address, the data processing system 102 quickly determines the first entry on the list that encompasses (or falls within) the provided host IP address. This significantly reduces the time required for matching compared to an unsorted list.

| Subnet/IP Address Range Configured | Subnets added to cache | Lowest IP Address Value | Highest IP Address Value |
|---|---|---|---|
| 10.20.30.0/24 | 10.20.30.0/24 | 169090560 | 169090815 |
| 10.20.0.0/16 | 10.20.0.0/16 | 169082880 | 169148415 |
| 10.0.0.0/8 | 10.0.0.0/8 | 167772160 | 184549375 |
| 10.20.30.0/30 | 10.20.30.0/30 | 169090560 | 169090563 |
| 10.20.30.11-10.20.30.15 | 10.20.30.11/32 | 169090571 | 169090571 |
| | 10.20.30.12/32 | 169090572 | 169090572 |
| | 10.20.30.13/32 | 169090573 | 169090573 |
| | 10.20.30.14/32 | 169090574 | 169090574 |
| | 10.20.30.15/32 | 169090575 | 169090575 |

The above subnets can be added to the sorted order cache in the following manner,

| Position in sorted list | Subnet | Hash-Key | Lowest IP Address Value |
|---|---|---|---|
| 1 | 10.20.30.15/32 | 169090575 | 169090575 |
| 2 | 10.20.30.14/32 | 169090574 | 169090574 |
| 3 | 10.20.30.13/32 | 169090573 | 169090573 |
| 4 | 10.20.30.12/32 | 169090572 | 169090572 |
| 5 | 10.20.30.11/24 | 169090571 | 169090571 |
| 6 | 10.20.30.0/30 | 169090561 | 169090560 |
| 7 | 10.20.30.0/24 | 169090560 | 169090560 |
| 8 | 10.20.0.0/16 | 169082880 | 169082880 |
| 9 | 10.0.0.0/8 | 167772160 | 167772160 |

In the case of overlapping subnets (e.g., where multiple subnets might share the same lowest IP address), the data processing system 102 can employ a method to handle potential collisions and ensure accurate matching. For example, consider two subnets: Subnet 1: 10.20.30.0/30 (narrower range) and Subnet 2: 10.20.30.0/24 (wider range). Both the subnets share the same lowest IP address values. However, Subnet 1 has a smaller range due to its /30 mask.

The data processing system 102 can detect the collision because both subnets share the same initial hash key (converted lowest IP address). Since Subnet 1 (10.20.30.0/30) is narrower than Subnet 2 (10.20.30.0/24), the data processing system 102 can increment the hash key value for Subnet 1 by 1. This adjustment places Subnet 1 higher in the sorted order during the sorting process. Due to the higher position in the sorted list, Subnet 1 (10.20.30.0/30) will be evaluated first when searching for a matching subnet for a host IP address within its range. Subnet 2 (10.20.30.0/24) will only be considered if the host IP address falls outside the narrower range of Subnet 1. This approach can ensure that more specific (narrower) subnets are prioritized in the matching process.

Implementing the systems and methods described herein can provide several advantages. For example, a computer using the method can perform faster matching. Utilizing a pre-sorted list can significantly reduce the time required to identify the matching subnet or IP range for an IP address (e.g., a host IP address). The method can also be more scalable. The method can efficiently handle large numbers of host groups and their associated subnets and IP ranges. The method can also be more accurate. The sorted structure can ensure that the most specific (e.g., narrowest) subnet or IP range is identified (e.g., always identified) for the IP address (e.g., the host IP address).

The high-performance subnet matching method can be exceptionally efficient in terms of CPU usage. The method can be used to generate violation policy alerts. A key requirement for these alerts is the accurate association of each host with its corresponding subnet. The high-performance subnet matching method can play a central role in achieving this association. By precisely tagging each host IP address with the most specific (narrowest) subnet it belongs to within a host group, the method can ensure that violation policy alerts are triggered (e.g., generated and transmitted to a specific computer or network provider) for the appropriate subnet whenever a violation occurs. A network provider can mitigate such alerts, such as by throttling or blocking network traffic from or to the IP address. In some cases, the data processing system 102 can use the generated data structure to identify or retrieve a subnet containing a specific host IP address.

In an aspect, a method can include generating, by one or more processors, a data structure comprising a set of subnets or Internet Protocol (IP) ranges, wherein generating the data structure comprises calculating, for each of a plurality of subnets or IP ranges, the lowest and highest IP addresses; converting, by the one or more processors, each calculated IP address into an integer value; and sorting, by the one or more processors, the plurality of subnets or IP ranges in descending order based on a lowest converted integer value of each of the plurality of subnets or IP ranges; identifying, by the one or more processors, a host IP address; iteratively querying, by the one or more processors using the identified host IP address, individual subnets or IP ranges of the set of subnets or IP ranges in order of increasing size beginning with a subnet or IP range with a smallest size until identifying a subnet or IP range in which the host IP address falls; and labeling, by the one or more processors, the host IP address with an indication of the identified subnet or IP range.

In some embodiments, converting each calculated IP address into an integer value comprises converting, by the one or more processors, each calculated IP address into a binary representation; and interpreting, by the one or more processors, the binary representation as an integer. In some embodiments, the method can further include preprocessing, by the one or more processors, the plurality of subnets or IP ranges to handle overlapping ranges by identifying, by the one or more processors, overlapping subnets or IP ranges; and adjusting, by the one or more processors, the integer values of overlapping subnets or IP ranges to ensure proper sorting. In some embodiments, adjusting the integer values comprises incrementing, by the one or more processors, the integer value of a narrower subnet or IP range; or decrementing, by the one or more processors, the integer value of a wider subnet or IP range. In some embodiments, iteratively querying comprises performing, by the one or more processors, a binary search on the sorted set of subnets or IP ranges. In some embodiments, the method can further include storing, by the one or more processors, the labeled host IP address in a database for network traffic analysis. In some embodiments, the network traffic analysis can include generating, by the one or more processors, violation policy alerts based on the labeled host IP addresses.

In an aspect, a system can include one or more processors; and memory storing instructions that, when executed by the one or more processors, cause the system to generate a data structure comprising a set of subnets or Internet Protocol (IP) ranges by: calculating, for each of a plurality of subnets or IP ranges, the lowest and highest IP addresses; converting each calculated IP address into an integer value; and sorting the plurality of subnets or IP ranges in descending order based on a lowest converted integer value of each of the plurality of subnets or IP ranges; identify a host IP address; iteratively query, using the identified host IP address, individual subnets or IP ranges of the set of subnets or IP ranges in order of increasing size beginning with a subnet or IP range with a smallest size until identifying a subnet or IP range in which the host IP address falls; and label the host IP address with an indication of the identified subnet or IP range.

In some embodiments, converting each calculated IP address into an integer value can include converting each calculated IP address into a binary representation; and interpreting the binary representation as an integer. In some embodiments, the instructions further cause the system to preprocess the plurality of subnets or IP ranges to handle overlapping ranges by: identifying overlapping subnets or IP ranges; and adjusting the integer values of overlapping subnets or IP ranges to ensure proper sorting. In some embodiments, adjusting the integer values comprises incrementing the integer value of a narrower subnet or IP range; or decrementing the integer value of a wider subnet or IP range. In some embodiments, iteratively querying comprises performing a binary search on the sorted set of subnets or IP ranges. In some embodiments, the instructions further cause the system to store the labeled host IP address in a database for network traffic analysis. In some embodiments, the network traffic analysis can include generating violation policy alerts based on the labeled host IP addresses.

In an aspect, a non-transitory computer-readable storage medium storing instructions that, when executed by one or more processors, cause the one or more processors to generate a data structure comprising a set of subnets or Internet Protocol (IP) ranges by: calculating, for each of a plurality of subnets or IP ranges, the lowest and highest IP addresses; converting each calculated IP address into an integer value; and sorting the plurality of subnets or IP ranges in descending order based on a lowest converted integer value of each of the plurality of subnets or IP ranges; identify a host IP address; iteratively query, using the identified host IP address, individual subnets or IP ranges of the set of subnets or IP ranges in order of increasing size beginning with a subnet or IP range with a smallest size until identifying a subnet or IP range in which the host IP address falls; and label the host IP address with an indication of the identified subnet or IP range.

In some embodiments, converting each calculated IP address into an integer value comprises converting each calculated IP address into a binary representation; and interpreting the binary representation as an integer. In some embodiments, the instructions further cause the one or more processors to: preprocess the plurality of subnets or IP ranges to handle overlapping ranges by: identifying overlapping subnets or IP ranges; and adjusting the integer values of overlapping subnets or IP ranges to ensure proper sorting. In some embodiments, adjusting the integer values comprises incrementing the integer value of a narrower subnet or IP range; or decrementing the integer value of a wider subnet or IP range. In some embodiments, iteratively querying comprises performing a binary search on the sorted set of subnets or IP ranges. In some embodiments, the instructions further cause the one or more processors to store the labeled host IP address in a database for network traffic analysis; and generate violation policy alerts based on the labeled host IP addresses.

In an aspect, a method can include generating, by one or more processors, a data structure comprising a set of subnets or a set of Internet Protocol (IP) ranges, wherein generating the data structure comprises: for each of a plurality of subnets or IP ranges, calculating, by the one or more processors, the lowest and highest IP addresses of the subnet or IP range; converting, by the one or more processors, each calculated IP address into an integer value; calculating, by the one or more processors, a size for each of the plurality of subnets or IP ranges based on a difference between a first value converted from the lowest IP address of the subnet or IP range and a second value converted from the highest IP address of the subnet or IP range; and sorting, by the one or more processors, the plurality of subnets or IP ranges in descending order based on the sizes of the plurality of subnets or IP ranges; identifying, by the one or more processors, a host IP address; iteratively querying, by the one or more processors using the identified host IP address, individual subnets or IP ranges of the set of subnets or IP ranges in order of increasing size beginning with a subnet or IP range with a smallest size of the plurality of subnets or IP ranges until identifying a subnet or IP range in which the host IP address falls; and labeling, by the one or more processors, the host IP address with an indication of the identified subnet or IP range.

In an aspect, a method can include generating, by one or more processors, a data structure comprising a set of subnets or IP ranges or a set of Internet Protocol (IP) ranges, wherein generating the data structure comprises: for each of a plurality of subnets or IP ranges, calculating, by the one or more processors, the lowest and highest IP addresses of the subnet or IP range; converting, by the one or more processors, each calculated IP address into an integer value; and sorting, by the one or more processors, the plurality of subnets or IP ranges in descending order based on a lowest converted integer value of each of the plurality of subnets or IP ranges; identifying, by the one or more processors, a host IP address; iteratively querying, by the one or more processors using the identified host IP address, individual subnets or IP ranges of the set of subnets or IP ranges in order of increasing size beginning with a subnet or IP range with a smallest size of the plurality of subnets or IP ranges until identifying a subnet or IP range in which the host IP address falls; and labeling, by the one or more processors, the host IP address with an indication of the identified subnet or IP range.

According to one aspect, a method includes generating a data structure comprising a set of subnets or Internet Protocol (IP) ranges by calculating the lowest and highest IP addresses for each of a plurality of subnets or IP ranges, converting each calculated IP address into an integer value, and sorting the plurality of subnets or IP ranges in descending order based on a lowest converted integer value of each. The method includes identifying a host IP address, iteratively querying individual subnets or IP ranges of the set in order of increasing size until identifying a subnet or IP range in which the host IP address falls and labeling the host IP address with an indication of the identified subnet or IP range. This method enables efficient matching of host IP addresses with overlapping subnets and IP ranges, which can be particularly useful for network traffic analysis and generating violation policy alerts in network monitoring systems.

FIG. 3A illustrates how a data processing system 300 is integrated into a larger network environment. The system 300 communicates with multiple client devices 104 and servers 302 through a network 105, allowing for comprehensive monitoring and analysis of network traffic across various endpoints. The network environment enables the data processing system to collect IP address information from diverse sources, facilitating the matching of host IP addresses with their corresponding subnets or IP ranges. The servers in a data center can implement the sorting algorithms described earlier, processing large volumes of subnet data to create optimized data structures for efficient IP address matching operations.

In some cases, as shown in FIG. 3B, the system is deployed in a cloud computing environment. This configuration allows for scalable processing capabilities and flexible resource allocation based on network monitoring demands. The cloud infrastructure provides distributed computing resources that can efficiently handle the conversion of IP addresses into integer values and perform the sorting operations required for the data structure generation. A software layer 312 can host the query agent functionality, while a platform layer 314 can support the IP address converter and sorter components, with an infrastructure layer 316 providing the necessary computational resources for processing large subnet datasets and handling overlapping IP ranges.

FIG. 3C provides a more detailed view of the computing device architecture that is used to implement the data processing system. The computing device 303 includes a CPU 318, a memory 320, various input/output components 322 (e.g., a keyboard 324, a pointing device 326, I/O devices 328, and display device 330), an installation device 332, storage devices 336, and network interfaces 334, all interconnected through a system bus 338. This architecture provides the necessary computational resources and connectivity options to support the IP address matching and labeling functions of the system. The CPU 318 executes the algorithms for calculating the lowest and highest IP addresses for each subnet, converting these addresses to integer values, and sorting the subnets based on these values. The memory 320 stores the sorted data structure containing the subnet information, while the storage device 336 including program 340 maintains databases of labeled host IP addresses for network traffic analysis and violation policy alert generation. The network interface 334 enables the system to monitor network traffic and identify host IP addresses that require matching with configured subnets or IP ranges.

By leveraging these various components and architectural elements, the system efficiently performs IP address labeling tasks, supporting accurate network traffic analysis and policy enforcement in complex network environments with overlapping subnets and IP ranges.

The system for matching host Internet Protocol addresses with overlapping subnets and Internet Protocol address ranges, as depicted in FIG. 1, operates through a series of interconnected processes and element interactions. The data processing system receives network traffic data through the network interface, which is then processed by various components stored in memory to efficiently match and label host IP addresses.

In some cases, the packet collector extracts IP address information from incoming network packets. The IP address converter then transforms these addresses into a standardized format, such as integer values, to facilitate comparison and sorting operations.

The sorter organizes the converted IP addresses and associated subnet or IP range information into a structured format within the data structure. During this process, the system identifies overlapping subnets or IP ranges. To handle these overlapping ranges, the system preprocesses the subnets or IP ranges before final sorting.

In some cases, preprocessing involves adjusting the integer values of overlapping subnets or IP ranges to ensure proper sorting and subsequent matching. For narrower subnets or IP ranges that overlap with wider ones, the system increments the integer value. Conversely, for wider subnets or IP ranges that overlap with narrower ones, the system decrements the integer value.

For example, if two subnets share the same lowest IP address, the system handles this collision by incrementing the hash key value of the narrower subnet. This adjustment ensures that the narrower subnet appears higher in the sorted list, allowing for more precise matching during subsequent operations.

Once the preprocessing and sorting are complete, the query agent performs lookup operations on the sorted data structure to identify the most specific subnet or IP range for a given host IP address. The labeler then associates metadata with the host IP address, indicating the specific subnet or IP range to which the address belongs.

The overall flow of data and processing, as illustrated in FIG. 2A and FIG. 2B, begins with the initial input of network traffic data and concludes with the output of labeled host IP addresses. These labeled addresses are stored in a database for further analysis or used to generate violation policy alerts.

In some cases, as shown in FIG. 3A and FIG. 3B, the system operates within a larger network environment or cloud computing infrastructure. This configuration allows for scalable processing and flexible resource allocation based on network monitoring demands.

The computing device architecture depicted in FIG. 3C provides the necessary computational resources and connectivity options to support these various processes and element interactions. By leveraging these components and architectural elements, the system efficiently performs IP address matching and labeling tasks in complex network environments with overlapping subnets and IP ranges.

A number of implementations have been described. Nevertheless, it will be understood that various modifications may be made without departing from the spirit and scope of the disclosure. Accordingly, other implementations are within the scope of the following claims.

## Claims

1. A method comprising:
generating, by one or more processors, a data structure comprising a set of subnets or Internet Protocol (IP) ranges, wherein generating the data structure comprises:
calculating, for each of a plurality of subnets or IP ranges, the lowest and highest IP addresses;
converting, by the one or more processors, each calculated IP address into an integer value; and
sorting, by the one or more processors, the plurality of subnets or IP ranges in descending order based on a lowest converted integer value of each of the plurality of subnets or IP ranges;
identifying, by the one or more processors, a host IP address;
iteratively querying, by the one or more processors using the identified host IP address, individual subnets or IP ranges of the set of subnets or IP ranges in order of increasing size beginning with a subnet or IP range with a smallest size until identifying a subnet or IP range in which the host IP address falls; and
labeling, by the one or more processors, the host IP address with an indication of the identified subnet or IP range.

2. The method of claim 1, wherein converting each calculated IP address into an integer value comprises:
converting, by the one or more processors, each calculated IP address into a binary representation; and
interpreting, by the one or more processors, the binary representation as an integer.

3. The method of claim 1, further comprising:
preprocessing, by the one or more processors, the plurality of subnets or IP ranges to handle overlapping ranges by:
identifying, by the one or more processors, overlapping subnets or IP ranges; and
adjusting, by the one or more processors, the integer values of overlapping subnets or IP ranges to ensure proper sorting; and
wherein, optionally, adjusting the integer values comprises:
incrementing, by the one or more processors, the integer value of a narrower subnet or IP range; or
decrementing, by the one or more processors, the integer value of a wider subnet or IP range.

4. The method of claim 1, wherein iteratively querying comprises:
performing, by the one or more processors, a binary search on the sorted set of subnets or IP ranges.

5. The method of claim 1, further comprising:
storing, by the one or more processors, the labeled host IP address in a database for network traffic analysis; and
wherein, optionally, the network traffic analysis comprises:
generating, by the one or more processors, violation policy alerts based on the labeled host IP addresses.

6. A system comprising:
one or more processors; and
memory storing instructions that, when executed by the one or more processors, cause the system to:
generate a data structure comprising a set of subnets or Internet Protocol (IP) ranges by:
calculating, for each of a plurality of subnets or IP ranges, the lowest and highest IP addresses;
converting each calculated IP address into an integer value; and
sorting the plurality of subnets or IP ranges in descending order based on a lowest converted integer value of each of the plurality of subnets or IP ranges;
identify a host IP address;
iteratively query, using the identified host IP address, individual subnets or IP ranges of the set of subnets or IP ranges in order of increasing size beginning with a subnet or IP range with a smallest size until identifying a subnet or IP range in which the host IP address falls; and
label the host IP address with an indication of the identified subnet or IP range.

7. The system of claim 6, wherein converting each calculated IP address into an integer value comprises:
converting each calculated IP address into a binary representation; and
interpreting the binary representation as an integer.

8. The system of claim 6, wherein the instructions further cause the system to:
preprocess the plurality of subnets or IP ranges to handle overlapping ranges by:
identifying overlapping subnets or IP ranges; and
adjusting the integer values of overlapping subnets or IP ranges to ensure proper sorting;
wherein, optionally, adjusting the integer values comprises:
incrementing the integer value of a narrower subnet or IP range; or
decrementing the integer value of a wider subnet or IP range.

9. The system of claim 6, wherein iteratively querying comprises:
performing a binary search on the sorted set of subnets or IP ranges.

10. The system of claim 6, wherein the instructions further cause the system to:
store the labeled host IP address in a database for network traffic analysis;
wherein, optionally, the network traffic analysis comprises:
generating violation policy alerts based on the labeled host IP addresses.

11. A non-transitory computer-readable storage medium storing instructions that, when executed by one or more processors, cause the one or more processors to:
generate a data structure comprising a set of subnets or Internet Protocol (IP) ranges by:
calculating, for each of a plurality of subnets or IP ranges, the lowest and highest IP addresses;
converting each calculated IP address into an integer value; and
sorting the plurality of subnets or IP ranges in descending order based on a lowest converted integer value of each of the plurality of subnets or IP ranges;
identify a host IP address;
iteratively query, using the identified host IP address, individual subnets or IP ranges of the set of subnets or IP ranges in order of increasing size beginning with a subnet or IP range with a smallest size until identifying a subnet or IP range in which the host IP address falls; and
label the host IP address with an indication of the identified subnet or IP range.

12. The non-transitory computer-readable storage medium of claim 11, wherein converting each calculated IP address into an integer value comprises:
converting each calculated IP address into a binary representation; and
interpreting the binary representation as an integer.

13. The non-transitory computer-readable storage medium of claim 11, wherein the instructions further cause the one or more processors to:
preprocess the plurality of subnets or IP ranges to handle overlapping ranges by:
identifying overlapping subnets or IP ranges; and
adjusting the integer values of overlapping subnets or IP ranges to ensure proper sorting;
wherein, optionally, adjusting the integer values comprises:
incrementing the integer value of a narrower subnet or IP range; or
decrementing the integer value of a wider subnet or IP range.

14. The non-transitory computer-readable storage medium of claim 11, wherein iteratively querying comprises:
performing a binary search on the sorted set of subnets or IP ranges.

15. The non-transitory computer-readable storage medium of claim 11, wherein the instructions further cause the one or more processors to:
store the labeled host IP address in a database for network traffic analysis; and
generate violation policy alerts based on the labeled host IP addresses.
